# EUROPEAN PATENT APPLICATION

(11) **EP 1 329 208 A2**
(43) Date of publication of application: **23.07.2003**
(21) Application number: 03075229.9
(22) Date of filing: 16.01.2003
(51) Int. Cl.: A61G 7/05, B60B 33/02

(54) **Improved apparatus for operating and/ or controlling swivel castors of an adjustable nursing or hospital bed**

(30) Priority: 17.01.2002 NL 1019764
(71) Applicant: ETESMI/J.W. KOCH B.V., NL-5015 AK Tilburg (NL)
(72) Inventor: Knol, Hendrikus Hubertus Johannes, 5015 AK Tilburg (NL)

(57) **Abstract**

The invention relates to an improved apparatus for operating and/or controlling swivel castors (12) of an adjustable nursing or hospital bed (1), in which with a horizontal or vertical control lever (11) with a spherical end button (15) and coupled to that a pull and press cable (19) for the further transmission of the positions of the control lever (11) to the swivel castors (12), in which in the present embodiment of the invention in position A at least two swivel castors (12) are blocked, in position N all swivel castors (12) can swivel freely and in position B to fix at least one swivel castor (12) in the momentary desired driving direction of the bed.

## Description

The present invention relates to an apparatus for directional operation of swivel castors of a nursing or hospital bed, which is designed for lying, nursing, treatment and transport of patients in a hospital surrounding, in which controlling the swivel castors is an important handling, in which the four or five swivel castors can be operated by means of a mechanical transmission, in which three positions of operation can be distinguished, such as the brake position, the neutral position and the position in which at least one castor is fixed in a certain driving direction.

A similar apparatus is commonly used for operating the swivel castors of a nursing or hospital bed, in which one or several foot pedals are used of the bottom side of the frame of the nursing or hospital bed, that operates four or five castors by means of a mechanical transmission. By operating the mentioned foot pedal in three positions with the foot, being the nil position, the brake position and the castors direction position, in which the nursing or hospital bed is moveable by means of swivel castors, these swivel castors can be put on the brake or fixed in the driving direction during transportation.

The known system has the disadvantage that the mentioned foot pedal can hardly be operated in the low position of the nursing or hospital bed because the foot pedal cannot or hardly be seen and the distance to the foot pedal in the lowest position of the nursing or hospital bed is so small that the foot pedal cannot be operated anymore. Further, a foot pedal has more disadvantages. The large distance between the eyes of the operating personnel and the foot pedal results in difficulties of determining the position of the foot pedal. Also, the foot pedals can hinder the nursing personnel during nursing treatments at the nursing or hospital bed. If the foot pedal has to be operated during transport of the nursing or hospital bed, the nursing or hospital bed must be stopped first before one can operate the foot pedal.

The aim of the present invention concerns to provide such an improved apparatus for operating and/or controlling swivel castors of an adjustable nursing or hospital bed, such as, for example, the Pronto Model 101, also from this applicant, of which the above described disadvantages are eliminated and of which the use and working is better and which can be put onto the market in an economical way.

For this purpose an improved apparatus for operating and/or controlling swivel castors of an in height adjustable and in lengthwise as far as shape adjustable nursing or hospital bed is further developed in such an inventive way, that the mentioned mechanical transmission consists of a horizontal or vertical movable control lever at preferably the rear partition of the foot of the nursing or hospital bed, in which the bottom side of the lying surface of the nursing or hospital bed is preferred, a transmission mechanism to a flexible connection, which can be in the form of a pull and press cable, in which the mentioned flexible connection by means of a lever mechanism operates at least one swivel castor to fix the direction and at least two swivel castors for the brake, in which the material of the various parts and their protection are chosen such that they comply with the concerned guidelines for medical means.

The advantage is, that under all circumstances the swivel castors can be swivelled, braked or fixed in an easy and handy manner in a certain direction by the nursing personnel, through which, especially while pushing the nursing or hospital bed forwards through, for example, the corridors of the nursing department, the bed will not start to wander about or will have to be stopped by hand with force. Further, the direction of a swivel castor can easily be fixed during transport.

Further the apparatus according to the invention is further developed in such a way, that the mentioned movable control lever consists of a round, at one end horizontal hinging bar profile and at the other end a spherical end button, which can be adjusted in three positions, being a left position (B) for fixing a swivel castor in the desired driving direction, a neutral middle position (N), in which all swivel castors can swivel freely, a right position (A), in which at least two swivel castors are on brake, and that the mentioned control lever is provided with a fixed lever at the hinging end to operate the pull and press cable.

The advantage is an easy and always good reachable operating handle for the nursing personnel.

Furthermore the apparatus according to the invention is further developed in such a way, that the mentioned pull and press cable is of the inner and outer cable kind, which is mounted at the ends on a transverse strip by means of thread and nuts and on both sides to levers hinging with a nipple, so that lever movements are transmitted efficiently, in which the mentioned pull and press cable consists of a composed thread as inner cable and in which the outer cable of the pull and press cable is made of a suitable plastic.

The advantages are an extremely flexible mechanical transmission, which adjusts supple at any height and/or length adjustment of the nursing or hospital bed and which is reliable and needs little maintenance.

The preferred construction of the invention will be described by way of example, and with reference to the accompanying drawing.

In which:
- Fig. 1: shows in oblique projection and in perspective an adjustable nursing or hospital bed, in which an improved apparatus for operating and/or controlling swivel castors according to a preferred construction of the invention can be built-in; and
- Fig. 2: shows in oblique projection the improved apparatus for operating and/or controlling an adjustable nursing or hospital bed, in which only a part of the frame of the rear side of the nursing of hospital bed is shown.

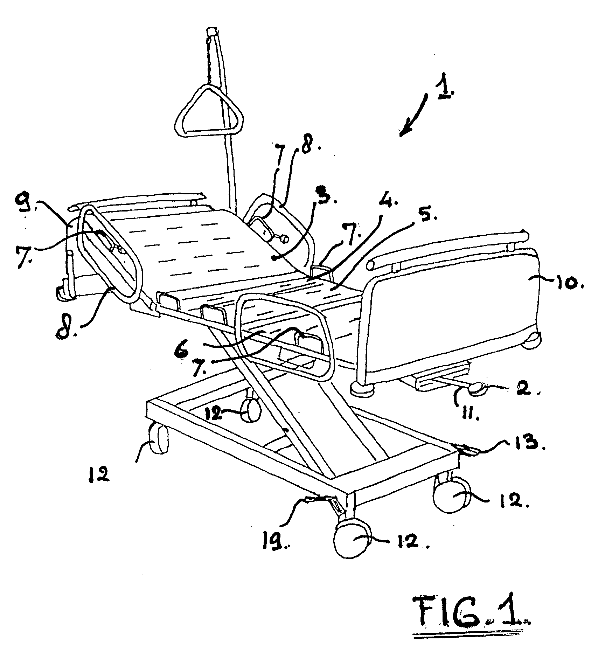

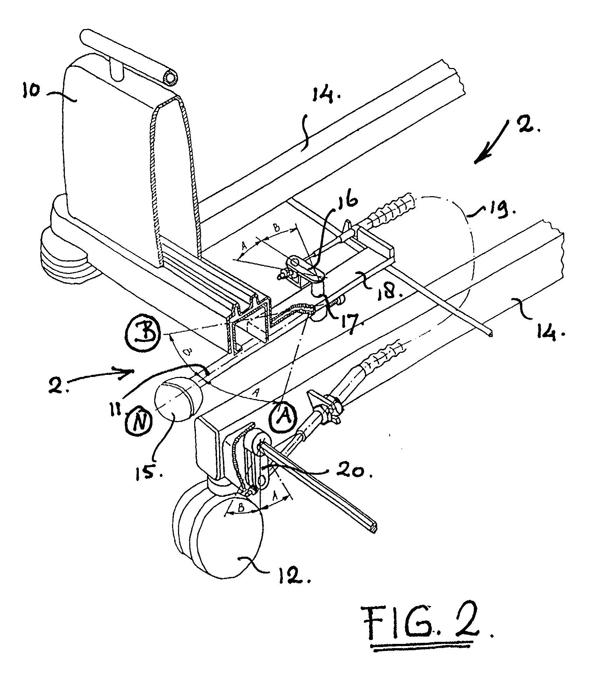

Figure 1 shows in oblique projection and in perspective an adjustable nursing or hospital bed 1, in which the improved apparatus 2 for operating and/or controlling swivel castors is built-in. The lying part consists of the mattress supporting parts 3, 4, 5, 6 and which with respect to each other can make an angle, so that the lying part for the patient is completely adjustable. Further, lower supports 7 and higher in height adjustable supports 8 are applied for lateral support of the mattress or the patient respectively. Further, at the head a partition 9 and at the foot an extendable partition 10 are mounted, in which below partition 10 on the extendable frame the lever 11 of the improved apparatus 2 for operating and/or controlling swivel castors 12 is mounted (see also figure 2). The known existing operation of the swivel castors 12 by foot 13 can herewith be cancelled and is only shown to explain the state of the art.

Figure 2 shows in an enlarged scale in oblique projection the improved apparatus 2 for operating and/or controlling the adjustable nursing or hospital bed 1, in which only a part of the frame girders 14 and the extendable rear partition 10 are drawn. The lever 11 with end button 15 is horizontally or vertically rotatable in a left position B to fix one swivel castor 12 in the desired driving direction, a neutral middle position N, in which all swivel castors 12 can swivel freely and a right position A, in which at least two swivel castors 12 are braked. Figures 1 and 2 show the embodiment according to the invention with a horizontally rotatable adjustment of the control lever, but a vertically rotatable construction is also well feasible with the present invention. A transmission mechanism 16, which is rigidly mounted on the lever 11 and has a point of rotation at 17 through the strip 18. The transmission mechanism 16 can thus operate the flexible connection, being the pull and press cable 19, and thus transmit the positions A, B and N on the swivel castors 12 by means of a second lever mechanism 20. This is done by a specially detailed cam roller on the swivel castors 12 to reach the desired positions A, B and N. Further important details or ways of construction are explained in figure 2.

Finally it has to be emphasized, that the above description constitutes a preferred embodiment of the present invention and that further variations and modifications are still possible without departing the scope of this patent description.

## Claims

1. Apparatus for directional operation of swivel castors (12) of a nursing or hospital bed (1), which is designed for lying, nursing, treatment and transport of patients in a hospital surrounding, in which controlling the swivel castors is an important handling, in which the four swivel castors (12) can be operated by means of a mechanical transmission, in which three positions of operation can be distinguished, such as the brake position, the neutral position and the position in which at least one castor is fixed in a certain driving direction, **characterized in that**, the mentioned mechanical transmission consist of a horizontal or vertical movable control lever (11) at preferably the rear partition (10) of the foot of the nursing or hospital bed (1), in which the bottom side of the lying surface of the nursing or hospital bed is preferred, a transmission mechanism (16) to a flexible connection, which can be in the form of a pull and press cable (19), in which the mentioned flexible connection by means of a lever mechanism (20) operates at least one swivel castor (12) to fix the direction and at least two swivel castors (12) for the brake, in which the material of the various parts and their protection are chosen such that they comply with the concerned guidelines for medical means.

2. Apparatus as claimed in claim 1, **characterized in that**, the mentioned movable control lever (11) consists of a round, at one end horizontal hinging bar profile and at the other end a spherical end button (15), which can be adjusted in three positions, being a left position (B) to fix a swivel castor (12) in the desired driving direction, a neutral middle position (N), in which all swivel castors (12) can swivel freely, a right position (A), in which at least two swivel castors (12) are on brake, and that the mentioned control lever is provided with a fixed lever (16) at the hinging end to operate the pull and press cable (19).

3. Apparatus as claimed in claim 1, **characterized in that**, the mentioned pull and press cable (19) is of the inner and outer cable kind, which is mounted at the ends on a transverse strip (18) by means of thread and nuts and at both sides to levers (16, 20) hinging with a nipple, so that lever movements are transmitted efficiently.

4. Apparatus as claimed in claims 1 and 2, **characterized in that**, the positions of the mentioned horizontal movable control lever (11) at the other end with lever and suitably shaped cam rollers can be transmitted to the mentioned swivel castors (12).

5. Apparatus as claimed in claim 2, **characterized in that**, the mentioned spherical end button (15) is made of plastic and mounted on the control lever (11) by means of a threaded connection, in which the colour of the spherical end button (15) can have a striking colour, such as red.

6. Apparatus as claimed in claim 4, **characterized in that**, the mentioned pull and press cable (19) consists of a composed thread as inner cable.

7. Apparatus as claimed in claims 3 and 6, **characterized in that**, the outer cable of the pull and press cable (19) is made of a suitable plastic.
